| | Europäisches Patentamt | | |
|---|---|---|---|
| (19) | European Patent Office | | |
| | Office européen des brevets | (11) | **EP 1 644 627 B1** |

(12) **FASCICULE DE BREVET EUROPEEN**

| | | | |
|---|---|---|---|
| (45) | Date de publication et mention de la délivrance du brevet:<br>**22.11.2006 Bulletin 2006/47** | (51) | Int Cl.:<br>*F02D 41/24* (2006.01)    *F02D 41/40* (2006.01)<br>*F02D 41/34* (2006.01) |
| (21) | Numéro de dépôt: **04767636.6** | (86) | Numéro de dépôt international:<br>**PCT/FR2004/001804** |
| (22) | Date de dépôt: **08.07.2004** | | |
| | | (87) | Numéro de publication internationale:<br>**WO 2005/008050 (27.01.2005 Gazette 2005/04)** |

| | |
|---|---|
| (54) | **PROCEDE DE DETERMINATION EN TEMPS REEL DE LA CARACTERISTIQUE DE DEBIT D'INJECTEUR DE CARBURANT**<br><br>VERFAHREN ZUR ECHTZEITBESTIMMUNG EINER KRAFTSTOFFEINSPRITZUNGSSTRÖMUNGSCHARAKTERISTIK<br><br>METHOD FOR REAL-TIME DETERMINATION OF FUEL INJECTOR FLOW CHARACTERISTIC |

| | | | |
|---|---|---|---|
| (84) | Etats contractants désignés:<br>**AT BE BG CH CY CZ DE DK EE ES FI FR GB GR HU IE IT LI LU MC NL PL PT RO SE SI SK TR** | (72) | Inventeur: **MAZET, Henri**<br>**F-78400 Chatou (FR)** |
| (30) | Priorité: **16.07.2003 FR 0308659** | (74) | Mandataire: **Bérogin, Francis et al**<br>**Cabinet Plasseraud**<br>**52 rue de la Victoire**<br>**75440 Paris Cedex 09 (FR)** |
| (43) | Date de publication de la demande:<br>**12.04.2006 Bulletin 2006/15** | | |
| | | (56) | Documents cités: |
| (73) | Titulaire: **Magneti Marelli Motopropulsion France SAS**<br>**61200 Argentan (FR)** | | **EP-A- 0 937 882**    **EP-A- 0 940 571**<br>**EP-A- 0 947 686**    **EP-A- 0 959 237**<br>**DE-A- 19 845 441**    **US-A1- 2003 111 043** |

## Description

L'invention concerne un procédé de détermination en temps réel, et en fonction de la durée de commande d'injection, de la caractéristique de débit d'au moins un injecteur de carburant, du type à commande électrique, alimentant un moteur à combustion interne, et monté dans un circuit d'alimentation en carburant du moteur, ce circuit comprenant au moins une pompe, alimentée depuis un réservoir de carburant, et reliée à une rampe commune d'alimentation en carburant des injecteurs du moteur, chaque injecteur étant commandé par une unité de contrôle moteur, comportant au moins un calculateur et au moins une mémoire, généralement réalisée sous la forme d'une unité électronique de commande et contrôle moteur, de sorte qu'à chaque cycle du moteur, chaque injecteur délivre audit moteur une masse de carburant déterminée par la caractéristique de débit d'injecteur, exprimant la masse injectée selon une fonction croissante de la durée de commande d'injection dudit injecteur, commandée par l'unité de contrôle moteur, pouvant prendre en compte également d'autres paramètres ayant une influence sur ladite caractéristique, comme la pression du carburant ou la tension électrique d'alimentation.

Les injecteurs de ce type ont une caractéristique de débit qui comporte une zone sensiblement linéaire, aux valeurs de la durée de commande d'injection supérieures à un temps minimum, et qui est définie par un gain, correspondant à sa pente, et par un décalage à l'origine, ou offset, correspondant à une durée de commande minimale pour une masse injectée nulle, et obtenue à l'intersection du prolongement de la zone linéaire, vers l'origine des durées de commande d'injection, avec l'axe des abscisses, exprimant les durées de commande d'injection, sur un diagramme plan sur lequel les masses injectées sont indiquées selon l'axe des ordonnées, ainsi qu'une zone non linéaire de la caractéristique, aux faibles valeurs des durées de commande d'injection, entre l'offset et la zone linéaire. Le gain local correspond ainsi à la pente locale en tout point de la courbe représentant la caractéristique de débit de l'injecteur.

Les injecteurs de ce type sont généralement qualifiés par leur constructeur par une caractéristique de débit théorique ou nominale dont les zones linéaire et non linéaire théoriques nominales sont initialement mémorisées dans l'unité de contrôle moteur, par exemple sous la forme d'un offset théorique et d'un gain théorique pour la zone linéaire, et d'au moins une cartographie ou table théorique ou relation mathématique pour la zone non linéaire.

Des injecteurs de carburant à commande électrique de ce type peuvent équiper des moteurs diesel ou à allumage commandé, et être montés dans des circuits d'alimentation à injection directe ou indirecte, avec ou sans retour de carburant de l'aval vers l'amont de la pompe.

On sait que les injecteurs utilisés pour réaliser l'injection d'une quantité de carburant prédéterminée par une unité de contrôle moteur présentent des dispersions et des évolutions dans le temps de leurs caractéristiques de débit, ce qui a pour conséquence que l'injection d'une masse donnée de carburant nécessite une commande de durée d'injection différente suivant l'injecteur commandé et le vieillissement de ce dernier. En effet, les dispersions des caractéristiques des injecteurs résultent des tolérances de fabrication des composants physiques des injecteurs, et donc de leurs dispersions dimensionnelles et de caractéristiques physiques, notamment les nombre et diamètre(s) des orifices d'injection des injecteurs, leurs orientations, la caractéristique élastique de leurs ressorts, etc ..., et l'évolution dans le temps des caractéristiques de débit des injecteurs résulte notamment du vieillissement des composants physiques des injecteurs.

Par ailleurs, la grande majorité des systèmes de commande et contrôle de l'injection, directe ou indirecte, équipant des moteurs à combustion interne de véhicules automobiles assure un contrôle de richesse en boucle fermée, et en continu pendant le fonctionnement du moteur, à l'aide d'une sonde dite sonde λ, détectant la teneur en oxygène des gaz d'échappement du moteur, et reliée à l'unité de contrôle moteur, de façon à garantir le dosage du mélange air-carburant idéal, en particulier dans le cas d'utilisation de catalyseurs trifonctionnels pour lesquels un dosage strochiométrique est requis. Ce contrôle de richesse en boucle fermée permet de compenser de façon satisfaisante les dispersions de tous les composants qui interviennent dans la détermination du dosage air-carburant, et qui auraient un impact sur la performance en terme de contrôle des émissions dans les gaz d'échappement du moteur, si les dispersions précitées n'étaient pas compensées. Les composants concernés sont ceux qui permettent de calculer le débit d'air d'admission au moteur et de piloter le débit de carburant injecté dans le moteur, de sorte que ces composants comprennent les injecteurs. Mais, à moins de stratégies particulières, les contrôles de richesse en boucle fermée ne permettent pas d'identifier les caractéristiques de chacun des composants concernés, que ce soit de façon globale ou individuelle. Autrement dit, le dosage du mélange air-carburant consiste à piloter un débit d'air d'admission au moteur et un débit de carburant correspondant, et les contrôles de richesse en boucle fermée permettent de compenser le rapport du débit d'air au débit de carburant, sans identifier la part de correction à apporter au débit d'air ou au débit de carburant, et, en outre, ces contrôles de richesse ne permettent pas de calculer une correction individualisée pour chaque cylindre, et donc chaque injecteur.

Le problème à la base de l'invention consiste donc, à partir de la connaissance d'une caractéristique théorique ou nominale de débit d'injecteur, de déterminer en temps réel, et en fonction de la durée de commande d'injection, l'évolution de cette caractéristique d'au moins un injecteur de carburant d'un moteur, afin de faire l'apprentissage de la relation qui existe entre la masse de carburant injectée et la durée de commande d'injection d'au moins un injecteur considéré, au cours de phases d'apprentissage qui se déroulent régulièrement, au cours du fonctionnement du moteur, sur des points de fonctionnement qui ne sont pas nécessairement en régime stabilisé, et pendant des périodes d'apprentissage suffisamment courtes pour ne pas générer de dégradation significative des émissions polluantes ni de désagrément sensible pour les occupants du véhicule.

Cet apprentissage peut concerner non seulement la caractéristique de débit de chacun des injecteurs utilisés sur un même moteur, mais également la caractéristique moyenne ou globale de l'ensemble des injecteurs d'un moteur considéré, à partir d'une caractéristique globale théorique ou nominale, définie par un gain global théorique ou nominal et un offset global théorique ou nominal, ainsi que par une zone non linéaire globale théorique ou nominale.

Le but de l'invention est donc de permettre une meilleure connaissance de la caractéristique de débit d'au moins un injecteur d'un moteur en fonctionnement par une détermination en temps réel de l'offset de l'injecteur considéré en supposant son gain connu, et de la partie non linéaire de sa caractéristique, afin d'avoir un suivi de l'évolution de la caractéristique individuelle de débit de chaque injecteur, ainsi que de pouvoir suivre l'évolution de la caractéristique globale de tous les injecteurs d'un moteur.

A l'effet de remédier aux inconvénients précités, le procédé selon l'invention de détermination en temps réel, et en fonction de là durée de commande d'injection, de la caractéristique de débit d'au moins un injecteur de carburant à commande électrique, alimentant un moteur à combustion interne et monté dans un circuit d'alimentation en carburant du type présenté ci-dessus, se caractérise en ce qu'il comprend au moins les étapes consistant à considérer que le gain est égal au gain théorique ou à un gain actualisé à partir du gain théorique, et, pour chaque injecteur dont on veut déterminer la caractéristique, à remplacer chacune d'au moins une injection de référence, d'une durée de commande d'injection commandée par l'unité de contrôle moteur selon la caractéristique mémorisée, par une injection multiple comportant une succession d'au moins deux injections dont les durées de commande d'injection sont supposées provoquer l'injection de la même masse de carburant que l'injection de référence remplacée, à déterminer l'écart de masse de carburant entre l'injection de référence remplacée et l'injection multiple, à en déduire une erreur de détermination de ladite caractéristique, et à modifier le gain et/ou l'offset de la zone linéaire ou au moins une table ou relation mathématique de la zone non linéaire de sorte à compenser ladite erreur, et à mémoriser la nouvelle caractéristique ainsi déterminée.

Selon l'invention, on considère donc que le gain individuel de l'injecteur considéré ou le gain global de tous les injecteurs est supposé connu, parce que ce paramètre est peu sujet à des dérives et/ou parce que l'on a déjà procédé à un apprentissage de ce paramètre, par exemple en mettant en oeuvre une stratégie connue à cet effet, ou le procédé décrit dans la demande de brevet français FR 03 02468 de la Demanderesse.

Le remplacement de chacune des injections d'une durée de commande d'injection donnée par une succession de deux ou plusieurs injections, dont la somme est supposée provoquer l'injection de la même quantité de carburant, pour provoquer un écart de débit délivré entre injection simple et injection multiple et représentatif d'une erreur de détermination de la caractéristique de débit d'un ou des injecteur(s) qui est mémorisée dans une unité de contrôle moteur est un procédé parfois utilisé actuellement, mais uniquement pour déterminer l'offset et dans des phases de mise au point du système d'injection, alors que le procédé selon l'invention se particularise par la mise en oeuvre d'une stratégie analogue mais en temps réel, sous des conditions d'autorisation ou de demandes imposées par l'unité de contrôle moteur, et pour déterminer également d'autres paramètre(s) et/ou zone(s) de la caractéristique de débit.

La mise en oeuvre du procédé de l'invention procure l'avantage de permettre, sans avoir à réaliser les injecteurs, et donc leurs composants, avec des tolérances très serrées, et ainsi sans augmenter le coût du système d'injection, de garantir une plus grande exactitude de la masse de carburant injectée dans chaque cylindre du moteur, et, par voie de conséquence, de garantir l'exactitude du dosage air-carburant et du couple développé par le moteur. Il en résulte un bon contrôle des émissions dans les gaz d'échappement, et un meilleur agrément de conduite du véhicule automobile. On peut ainsi se contenter d'équiper le moteur d'injecteurs moins performants, car la mise en oeuvre du procédé selon l'invention permet de compenser les dispersions au niveau des composants physiques des injecteurs.

Dans un mode de réalisation préféré, le procédé selon l'invention comprend au moins les étapes consistant à déterminer d'abord l'offset réel Or de la zone linéaire de la caractéristique, individuelle pour un seul injecteur ou globale pour l'ensemble des injecteurs du moteur, en remplaçant chacune d'au moins une injection de référence de durée de commande d'injection T par une injection multiple comprenant une succession d'un nombre n ≥ 2 d'injections d'une même durée de commande d'injection $\dfrac{T - Ot}{n} + Ot$, supérieure au temps minimum, et où Ot est l'offset théorique ou nominal, individuel ou global selon que l'on considère un injecteur ou l'ensemble des injecteurs du moteur, et à déterminer que l'offset réel Or est donné par la formule $Or = \dfrac{Mr - Mr'}{(n-1).G} + Ot$, où Mr et Mr' sont les masses de carburant injectées respectivement pendant les applications des injections de référence et multiples, n est le nombre d'injections de chaque injection multiple, G est le gain de l'injecteur ou des injecteurs considérés en supposant que le gain réel est égal au gain nominal ou théorique (individuel ou global) mémorisé dans l'unité de contrôle moteur, dans laquelle est également mémorisé l'offset théorique ou nominal Ot.

On peut ainsi effectuer l'apprentissage de l'offset de la zone linéaire de la caractéristique individuelle ou globale respectivement d'un injecteur ou de tous les injecteurs d'un même moteur.

Comme l'écart de masse de carburant entre les injections de référence remplacée(s) et multiple(s), c'est-à-dire la différence entre Mr et Mr', est proportionnelle à n-1, le fait de remplacer une injection de référence par une injection mutliple comportant un plus grand nombre d'injections de durée de commande plus limitée rend le procédé d'apprentissage plus sensible à l'écart de débit mesurable entre les, deux modes d'injection. Néanmoins, cette augmentation de n rencontre rapidement sa limite, dans la mesure où chacune des n injections doit avoir une durée de commande suffisamment importante pour être supérieure à la valeur du temps minimum, et être dans la zone linéaire.

Mais il est clair que l'utilisation d'un nombre n d'injections aussi grand que possible est particulièrement intéressant pour les injections multiples utilisées pour la détermination de l'offset de la caractéristique d'un injecteur individuel, car pour une telle détermination, une perte de sensibilité vient de ce que l'écart de masse de carburant injectée est alors bien plus faible (dans un rapport de m, où m est le nombre des injecteurs du moteur) que l'écart de masse de carburant déterminée lorsque les deux modes d'injection (injections de référence et injections multiples) sont appliqués à tous les injecteurs d'un même moteur, pour la détermination de leurs caractéristiques globales.

L'écart de masse de carburant précité, peut, que le moteur soit de type diesel ou à allumage commandé, que le système d'injection soit à injection directe ou indirecte, et que le circuit d'alimentation en carburant soit avec ou sans retour permanent de carburant de l'aval vers l'amont de la pompe, être déterminé en prenant en compte le débit d'air admis au moteur, et qui est toujours connu de l'unité de contrôle moteur, et le signal provenant d'une sonde $\lambda$ de détection de l'oxygène dans les gaz d'échappement du moteur, lorsque le système d'injection du moteur est piloté en boucle fermée et comprend une telle sonde $\lambda$ disposée dans l'échappement du moteur.

En conséquence, de manière connue, la mesure de la masse de carburant injectée peut être effectuée, dans chacun des deux modes d'injection (injections de référence et injections multiples) à partir du signal procuré par la sonde $\lambda$ et de la connaissance de la masse d'air admise au moteur, pour chaque point de fonctionnement de ce dernier, y compris si le système n'est pas stable pendant cette procédure.

Ainsi, l'écart de masse de carburant injectée peut être déterminé en tenant compte de la variation de richesse du mélange air/carburant, en se basant sur un signal procuré à l'unité de contrôle moteur par une sonde $\lambda$ détectant la teneur en oxygène dans les gaz d'échappement du moteur, et de la masse d'air admise au moteur. En particulier, cet écart de masse de carburant injectée peut être calculé par l'unité de contrôle moteur à partir du signal de la sonde $\lambda$ et d'une masse objective de carburant à injecter, ladite masse objective étant établie en tenant compte de la masse d'air admise au moteur et d'un signal de richesse objective.

Mais, lorsque le procédé selon l'invention est mis en oeuvre sur un circuit d'alimentation en carburant du moteur qui est un circuit d'injection directe, dans lequel une rampe commune est alimentée par une pompe à haute pression, elle-même alimentée par une pompe de gavage reliée au réservoir, et que le circuit d'alimentation est du type à volume fixé et sans retour permanent de carburant depuis l'aval vers l'amont de la pompe à haute pression, qui est pilotée en débit, et dont l'unité de contrôle moteur a en mémoire un modèle de comportement du circuit, il est possible de déterminer l'écart de masse de carburant injectée en se basant sur le modèle de comportement du circuit, d'après l'évolution de la pression dans le circuit de carburant, suite à une perturbation imposée au fonctionnement de la pompe, comme indiqué dans le brevet FR 2 803 875.

Dans ce cas, il est avantageux que la perturbation dans la commande de la pompe à haute pression consiste à provoquer un arrêt de cette pompe, et l'écart de masse de carburant injectée est alors avantageusement déterminé d'après des chutes de pression dans le circuit d'alimentation, consécutives à l'arrêt de la pompe d'alimentation, d'une part, pendant l'application d'au moins une injection de référence, et, d'autre part, pendant l'application de la ou des injections multiples de remplacement, le modèle de comportement du circuit faisant correspondre, à chaque chute de pression, une masse de carburant injectée.

Après avoir déterminé la caractéristique de débit pour les durées de commande d'injection supérieures au temps minimum, c'est-à-dire après avoir effectué l'apprentissage de la zone linéaire de cette caractéristique, le procédé selon l'invention comprend au moins des étapes consistant à déterminer la zone non linéaire, et, à cet effet, à remplacer chacune d'au moins une injection de référence de durée de commande d'injection T dans ladite zone linéaire, et à laquelle il correspond une masse injectée M, par une injection multiple comportant une succession de $n \geq 2$ injections supposées donner la même masse de carburant injectée M que l'injection de référence remplacée et ayant une même durée de commande d'injection Tn située dans la zone non linéaire, de sorte à identifier la caractéristique de débit au point correspondant de sa zone non linéaire, pour lequel il correspond à la durée de commande de chaque injection d'une injection multiple $Tn = \dfrac{T - Or}{n} + Or$, une masse de carburant injectée $\dfrac{M}{n}$, et à faire varier n et/ou Tn, pour identifier au moins une partie de la zone non linéaire.

Dans ce cas également, il est possible de faire l'apprentissage de la zone non linéaire individuelle, d'un seul injecteur considéré, ou globale si tous les injecteurs sont considérés, selon que l'on prend en compte les gain, offset et zone non linéaire théoriques ou nominals individuels, ou les gain, offset, et zone non linéaire théorique ou nominale globaux.

En variante, pour déterminer la zone non linéaire après avoir déterminé la zone linéaire, le procédé selon l'invention peut consister à imposer une durée de commande d'injection T2 dans la zone non linéaire, et pour laquelle on veut déterminer la caractéristique, et à remplacer chacune d'au moins une injection de référence de durée de commande d'injection T dans la zone linéaire et à laquelle il correspond une masse injectée M, par une injection multiple à $n \geq 2$ injections, supposées donner la même masse de carburant injectée M que l'injection de référence remplacée, et dont l'une a une durée de commande d'injection T1 située dans la zone linéaire, et à laquelle il correspond une masse injectée M1, et dont les n-1 autres injection(s) ont chacune la même durée de commande d'injection T2 imposée, et à chacune desquelles il correspond une masse injectée M2 telle que

$$M2 = \frac{M - M1}{n - 1}, \quad \text{et à faire varier T2, inférieure au}$$

temps minimum, et/ou n, de sorte à déterminer au moins une partie de la zone non linéaire.

Dans cette variante également, la zone non linéaire peut être déterminée globalement, pour tous les injecteurs d'un même moteur, ou individuellement, pour l'un ou chacun d'entre eux, mais, dans ce cas, avec moins de sensibilité.

De même, dans les deux modes de mise en oeuvre du procédé selon l'invention pour déterminer la zone non linéaire, la détermination de l'écart de masse de carburant injectée Mr - Mr' ou M - M1, comme mentionné ci-dessus, peut être obtenue soit à partir du débit d'air d'admission au moteur et d'un signal provenant de la sonde λ, soit, dans le cas particulier d'un circuit sans retour de carburant de l'aval vers l'amont de la pompe, dans un système d'injection directe dans lequel l'unité de contrôle moteur connaît un modèle de comportement du circuit, et pilote la pompe en débit, en commandant l'arrêt de la pompe et en mesurant des chutes de pression pendant l'application respectivement des injections de référence et des injections multiples, pour en déduire des masses de carburant injectées, par l'intermédiaire du modèle de comportement du circuit.

Comme évoqué ci-dessus, le procédé de l'invention' peut être appliqué soit à la totalité des injecteurs d'un moteur, soit à un seul injecteur à la fois, auquel cas le procédé est avantageusement appliqué successivement sur chacun des injecteurs du moteur, de façon à faire l'apprentissage de leurs caractéristiques individuelles.

D'autres avantages et caractéristiques de l'invention ressortiront de la description donnée ci-dessous, à titre non limitatif, d'exemples de réalisation décrits en référence aux dessins annexés sur lesquels :

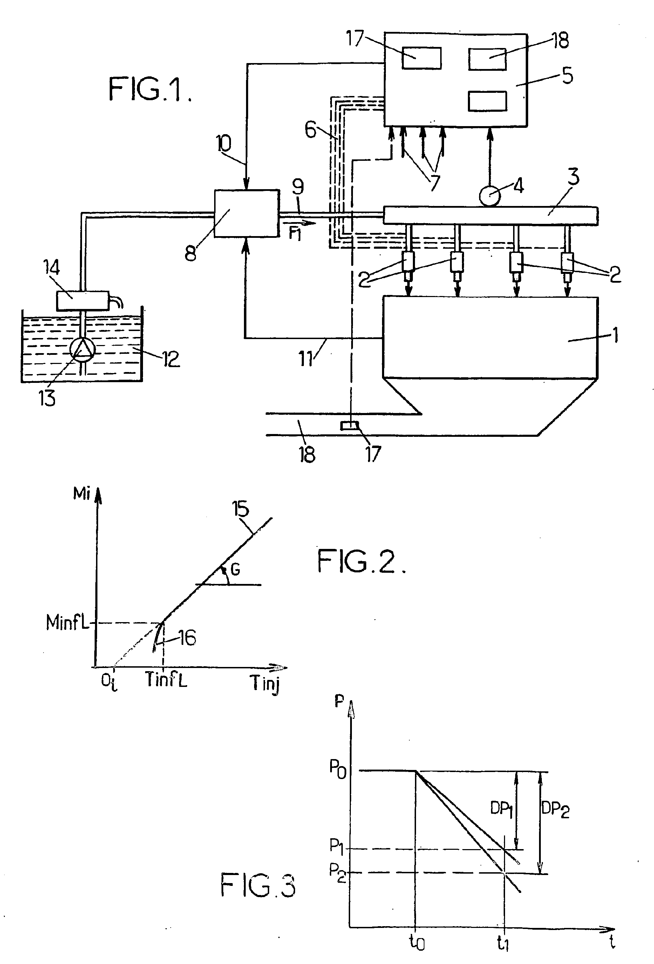

- la figure 1 est un schéma d'un circuit d'alimentation en carburant d'un moteur à combustion interne de véhicule automobile par injection directe, pour la mise en oeuvre du procédé de l'invention,
- la figure 2 représente une caractéristique de débit, qui peut être une caractéristique globale de tous les injecteurs du circuit de la figure 1, ou une caractéristique individuelle d'un seul injecteur,

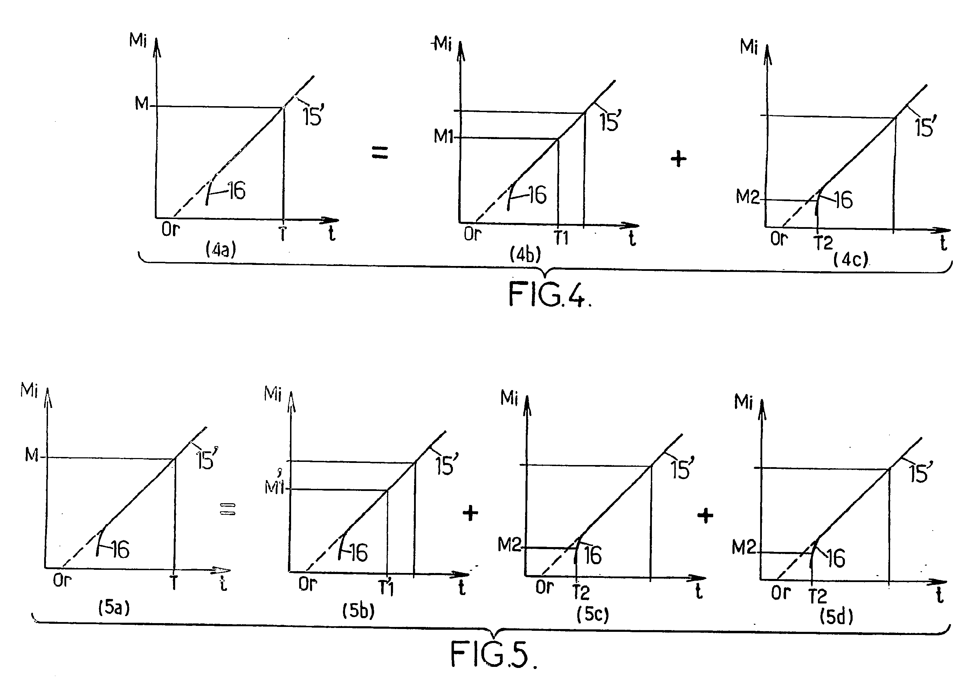

- la figure 3 représente l'évolution de la pression dans la rampe commune du circuit de la figure 1, en fonction du temps, dans le cas de deux chutes de pression provoquées par l'arrêt de la pompe du circuit de la figure 1, et dont chacune est obtenue pour l'un respectivement de deux régimes différents d'injection, commandés pour un certain nombre d'injections sur tous les injecteurs ou un seul d'entre eux,
- la figure 4 est un ensemble de trois caractéristiques schématisant le remplacement d'une injection de référence (fig. 4a), dans la zone linéaire, par une injection multiple à deux injections consécutives dont l'une est dans la zone linéaire (fig. 4b) et l'autre dans la zone non linéaire (fig. 4c),

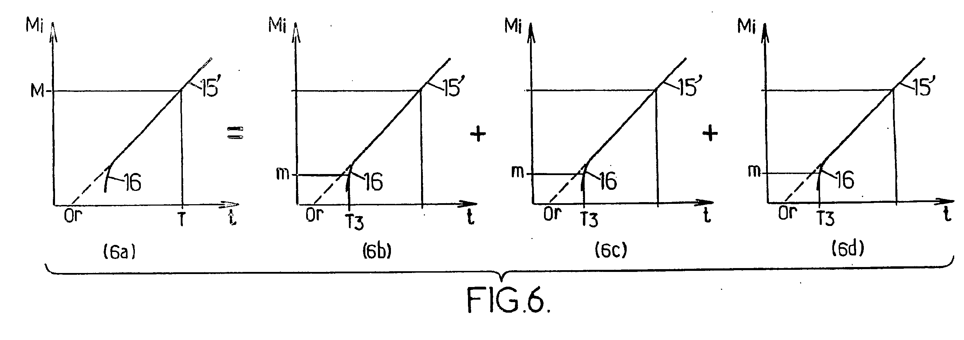

- la figure 5 représente un ensemble de quatre caractéristiques, dont l'une pour une injection de référence dans la zone linéaire (fig. 5a), et les trois autres pour une injection multiple à trois injections successives dont l'une dans la zone linéaire (fig. 5b) et les deux autres au même point de la zone non-linéaire (fig. 5c et fig. 5d), et
- la figure 6 est une figure analogue aux figures 4 et 5 et représentant un ensemble de quatre caractéristiques, dont l'une correspond à une injection de référence dans la zone linéaire (fig. 6a) et les trois autres à une injection multiple à trois injections successives au même point de la zone non linéaire (fig. 6b, 6c et 6d).

Sur la figure 1 est représenté schématiquement un moteur à combustion interne 1 pour véhicule automobile. Par exemple, le moteur considéré 1 est un moteur à quatre cylindres en ligne, à allumage commandé et à cycle moteur à quatre temps, alimenté en carburant par injection dite directe, bien que le procédé de l'invention soit applicable à un moteur à injection indirecte et/ou de type diesel.

L'injection de carburant est assurée dans chaque cylindre du moteur 1 par l'un respectivement des quatre injecteurs 2.

Ces injecteurs 2 sont alimentés en carburant à haute pression par une rampe commune de carburant 3, dans laquelle la pression de carburant est déterminée, au moins à certains instants du cycle moteur, par mesure par un capteur de pression 4 transmettant le signal de pression mesurée à une unité de contrôle moteur 5, ou par calcul dans cette unité 5 à partir de certaines mesures effectuées par le capteur 4 à certains instants du cycle moteur, comme proposé dans le brevet FR 2 803 875.

L'unité de contrôle moteur 5 est une unité électronique commandant l'injection du carburant dans le moteur 1, en commandant par le faisceau de conducteurs électriques de commande 6 des instants et durées de commande d'injection des injecteurs 2, ainsi que l'allumage dans les cylindres du moteur 1, dans l'exemple considéré d'un moteur à allumage commandé, et, éventuellement, d'autres fonctions, telles que la commande d'admission d'air au moteur, par l'intermédiaire d'un corps papillon motorisé, en fonction notamment de l'enfoncement de la pédale d'accélérateur, et d'autres fonctions de sécurité, telles qu'antidérapage, antipatinage et/ou antiblocage des roues du véhicule. Cette unité électronique 5 comprend, de manière bien connue, au moins un calculateur avec des circuits de calcul, des circuits de mémoire et des circuits de comparaison notamment, et dans sa fonction de commande de l'injection, l'unité 5 commande et contrôle la quantité de carburant injectée par chacun des injecteurs 2 dans le cylindre correspondant du moteur 1, en fonction des temps moteur dans chacun des cylindres, des paramètres et conditions de fonctionnement du moteur, en particulier de son régime, de sa charge ou encore de sa température, et de la demande en carburant, en fonction notamment du débit d'admission d'air dans le moteur 1 et du couple que doit développer le moteur, ces paramètres étant entrés en 7 dans l'unité 5 de contrôle moteur.

Dans cet exemple, la rampe commune 3 est alimentée en carburant à haute pression par une pompe à haute pression 8, pilotée en débit et reliée à la rampe 3 par une conduite 9, dans laquelle le carburant s'écoule dans le sens de la flèche F1, et l'unité de contrôle moteur 5 pilote la pompe haute pression 8 par la liaison logique 10 et détermine ainsi la masse de carburant envoyée par la pompe haute pression 8 dans la rampe 3, à chaque cycle du moteur 1.

La pompe haute pression 8 est entraînée en rotation par le moteur 1 par l'intermédiaire d'une liaison mécanique schématisée en 11, de manière connue en soi. La pompe haute pression 8 est elle-même alimentée en carburant par un circuit de gavage comprenant, de l'amont vers l'aval, un réservoir de carburant 12, une pompe de gavage ou pompe à basse pression 13, immergée dans le réservoir 12 et alimentée à travers un filtre (non représenté), et un régulateur de pression de carburant 14, dont une sortie permet de retourner du carburant en excès dans le réservoir 12, et dont une autre sortie est reliée à l'admission de la pompe haute pression 8, au niveau de laquelle est implantée une électrovanne (non représentée) commandée en tout ou rien depuis l'unité 5 par la liaison logique 10, de sorte que le débit de carburant de la pompe haute pression 8 est connu de l'unité de contrôle 5, laquelle peut commander cette électrovanne d'entrée de façon à imposer à la pompe haute pression 8 un débit nul.

Le circuit d'alimentation du moteur 1 en carburant par injection directe est ainsi un circuit haute pression, comprenant la pompe haute pression 8 et les organes en aval de cette dernière, à savoir la conduite 9 et la rampe commune 3, et ce circuit haute pression, qui est un circuit de volume fixé et sans retour permanent de carburant ou sans recirculation de carburant de l'aval vers l'amont de la pompe haute pression 8, est alimenté par un circuit de gavage à basse pression, en amont de la pompe haute pression 8, et comprenant le réservoir 12, la pompe 13 et le régulateur 14.

Ainsi, la masse de carburant présente dans le circuit haute pression ne résulte que des actions de remplissage par la pompe haute pression 8 et d'injection de carburant dans le moteur 1 par les injecteurs 2, ces actions étant contrôlées par l'unité 5.

La caractéristique de débit d'un injecteur 2, exprimant la masse de carburant injecté Mi en fonction de la durée de commande d'injection Tinj, déterminée par l'unité 5, correspond à une fonction croissante dont la courbe, représentée sur la figure 2, a une pente égale au gain local G de l'injecteur, qui est associé à toute valeur de la durée d'injection et défini par le rapport entre une variation de masse injectée à la suite d'une petite variation de durée d'injection, et cette même variation de durée d'injection. Cette courbe comprend une zone sensiblement linéaire 15, dans laquelle le gain G est constant, et une zone non linéaire 16, aux faibles valeurs de la durée de commande d'injection (valeurs inférieures à un temps minimum correspondant à la limite inférieure de linéarité TinfL), et dans laquelle le gain local est rapidement variable.

La zone linéaire 15 de la caractéristique est déterminée non seulement par sa pente ou gain constant G de l'injecteur dans cette zone, mais également par un décalage à l'origine ou offset Ot, à l'intersection du prolongement de la partie linéaire 15 de la courbe vers l'origine avec l'axe des abscisses indiquant les durées de commande d'injection Tinj.

On sait que la masse MinfL qui est injectée pour une durée de commande d'injection égale à la limite inférieure TinfL de la zone linéaire 15 est égale à la somme des masses injectées pendant les phases transitoires correspondant aux phases respectivement d'établissement et de coupure du débit instantané d'un injecteur 2 provoquées respectivement par l'ouverture et la fermeture de l'injecteur 2 résultant des déplacements d'un obturateur de cet injecteur respectivement à l'établissement et à la coupure d'un courant d'excitation dans une bobine de l'injecteur à commande électromagnétique, et faisant suite respectivement au début et à la fin d'un ordre logique de commande d'injection élaboré dans l'unité 5 et transmis par cette dernière à l'injecteur 2 considéré par le conducteur correspondant du faisceau 6.

En général, les injecteurs 2 d'un même type sont qualifiés par une caractéristique théorique de débit d'injecteur, déterminée, d'une part, par un gain théorique Gt et un offset théorique Ot, pour définir la zone linéaire théorique 15 de la courbe, et, d'autre part, par une zone non linéaire 16 théorique, résultant de l'application d'une ou plusieurs relations mathématiques et/ou mémorisée dans l'unité 5 sous la forme de tables ou de cartographies indiquant la masse injectée Mi pour une durée de commande d'injection Tinj comprise entre la limite inférieure de linéarité TinfL et l'offset théorique Ot et dans la plage de durée de commande d'injection correspondant à la zone non linéaire 16.

Partant de cette caractéristique théorique qui est individuelle (pour un injecteur 2) ou globale (pour tous les injecteurs 2), le procédé de l'invention vise à déterminer en temps réel (moteur 1 en fonctionnement) cette caractéristique ou individuelle (pour l'un, et de préférence chacun en succession, des injecteurs 2), ou globale (pour tous les injecteurs 2 du moteur 1), en commençant par faire l'apprentissage de la zone linéaire de la caractéristique, et, à cette fin, on considère que le gain G est constant et reste égal au gain théorique Gt, ou à un gain actualisé à partir du gain théorique, par exemple par la mise en oeuvre du procédé décrit dans la demande de brevet français FR 03 02468 de la Demanderesse. Le gain G peut être considéré comme constant car sa valeur est peu sujette à des dérives.

En conséquence, l'apprentissage de la zone linéaire de la caractéristique revient à assurer l'apprentissage de l'offset réel Or de cette zone linéaire.

A cet effet, pendant un intervalle de temps d'apprentissage, l'unité de contrôle moteur 5 commande le remplacement, par exemple sur tous les injecteurs 2, si l'on veut déterminer l'offset réel global de la zone linéaire de la caractéristique de débit global des injecteurs 2, d'un certain nombre d'injections dites de référence, ayant des durées de commande d'injection situées dans la zone linéaire 15 de la caractéristique théorique nominale, et correspondant aux besoins du moteur 1 pour ces points de fonctionnement du moteur, tels que déterminés par l'unité 5, par un même nombre d'injections multiples, constituées chacune par une succession d'au moins deux injections, dont la durée de commande d'injection de chacune est supérieure au temps minimum, et donc également située dans la zone linéaire de la caractéristique de départ. Typiquement, chaque injection de référence est remplacée par une injection multiple à deux injections successives, dont la durée effective d'injection de chacune, c'est-à-dire sa durée de commande d'injection diminuée de l'offset dont on dispose, c'est-à-dire l'offset théorique Ot, est égale à la moitié de la durée effective d'injection de l'injection de référence, de sorte que les deux injections successives de l'injection multiple sont supposées injecter dans le moteur la même masse de carburant que l'injection de référence remplacée.

En d'autres termes, dans ce cas, chaque injection de référence, d'une durée de commande d'injection égale à T (dans la zone linéaire et donc supérieure au temps minimum) est remplacée par une injection multiple à deux injections consécutives ayant chacune une durée de commande d'injection égale à $\dfrac{T-Ot}{2}+Ot$, alors que la masse de carburant Mr réellement injectée par l'injection de référence, ou masse injectée de référence, est donnée par la formule Mr = G x (T - Or), où Or est l'offset réel recherché, et alors que la masse Mr' injectée par les deux injections successives d'une injection multiple peut être exprimée par la formule suivante :

$$Mr' = 2.G.\left(\frac{T-Ot}{2}+Ot-Or\right),$$ dans laquelle Mr et Mr' sont les masses injectées respectivement lors de l'injection de référence et lors de l'injection multiple (double dans ce cas),

G est le gain global des injecteurs 2 (en supposant que ce gain est égal au gain global théorique),

Or est l'offset réel global de la caractéristique globale des injecteurs 2,

Ot est l'offset théorique global mémorisé dans l'unité 5, et

T est, comme déjà dit, la durée de commande d'injection de l'injection de référence choisie en zone linéaire.

A partir des formules ci-dessus exprimant Mr et Mr', on obtient que l'offset réel Or et le gain G sont liés par la formule suivante :

$$Or = Ot + \frac{Mr - Mr'}{G}.$$

De manière plus générale, si chaque injection de référence (de durée de commande d'injection T dans la zone linéaire) appliquée sur les injecteurs 2 pendant le temps d'apprentissage est remplacée par une injection multiple à n ≥2 injections, dont la durée de commande d'injection de chacune est suffisamment grande pour être supérieure au temps minimum Tinf L, chacune des n injections de l'injection multiple a alors une durée de commande d'injection égale à $\dfrac{T-Ot}{n}+Ot$. La masse de carburant injectée par chaque injection multiple est alors égale à : $Mr' = n.G.\left(\dfrac{T-Ot}{n}+Ot-Or\right).$

L'offset réel se calcule alors par la formule suivante : $Or = \dfrac{Mr - Mr'}{(n-1).G} + Ot.$

Comme la différence entre Mr et Mr' est proportionnelle à (n-1), le fait de remplacer chaque injection de référence par une injection multiple constituée d'un plus grand nombre d'injections plus brèves rend le procédé d'apprentissage plus sensible à l'écart de masse de carburant injectée mesurable entre les deux modes d'injections (injections de référence et injections multiples).

Le procédé de détermination de l'offset réel, comme décrit ci-dessus, peut n'être appliqué qu'à un seul des injecteurs 2, en prenant en compte l'offset théorique individuel et le gain individuel de cet injecteur 2, de sorte à déterminer l'offset réel individuel. Mais on comprend que cette détermination est réalisée avec une certaine perte de sensibilité, car l'écart entre les masses de carburant injectées, d'une part par l'application d'injections de référence et d'autre part par l'application d'injections multiples de remplacement sur l'injecteur considéré, sera plus faible que pour la détermination de l'offset réel global, et, en première approximation, on peut estimer que l'écart de masse injectée entre les deux modes d'injections sur un seul injecteur 2 est égal au rapport de cet écart calculé pour définir l'offset réel global au nombre m d'injecteurs, en effectuant l'apprentissage avec les mêmes nombres d'injections de référence et de remplacement et les mêmes injections multiples de remplacement.

Donc, pour connaître l'offset réel global ou individuel, il reste à déterminer l'écart de masse de carburant injectée Mr - Mr'.

Cette détermination de l'écart de masse de carburant injectée peut se faire d'après la variation de richesse du mélange air-carburant et la connaissance de la masse d'air admise au moteur 1, sur pratiquement tous les systèmes d'injection, qu'ils soient directs ou indirects, sur les moteurs à essence ou diesel, et avec des circuits d'alimentation en carburant qui ne sont pas nécessairement du type spécifique décrit ci-dessus, c'est-à-dire à volume fixé, à pompe commandée en débit et sans retour de carburant de l'aval vers l'amont de la pompe, et dont un modèle de comportement du circuit est connu de l'unité de contrôle moteur 5, sous réserve que ces systèmes d'injection comprennent un contrôle de richesse en boucle fermée, assuré à l'aide d'une sonde $\lambda$ 17, disposée dans la ligne d'échappement 18 du moteur 1, et détectant la teneur en oxygène des gaz d'échappement, cette sonde $\lambda$ étant reliée à l'unité 5 pour lui transmettre ses signaux.

De manière connue, l'évaluation de la masse de carburant injectée, pendant chacun des deux régimes d'injection précités, peut consister à diviser la masse d'air, admise au moteur pendant chacune de ces phases, et mesurée par l'unité de contrôle 5, par un terme proportionnel au coefficient $\lambda$, lui-même mesuré par la sonde $\lambda$ 17 ou calculé d'après le signal de cette sonde, selon la formule :

$$\lambda = \frac{A/F}{(A/F)s}$$ , dans laquelle A et F sont les mesures respectivement d'air et de carburant, et l'indice s correspond à la valeur stoechiométrique du rapport A/F. On sait que le coefficient $\lambda$ peut être mesuré directement, si le moteur 1 est équipé d'une sonde $\lambda$ 17 proportionnelle dans son échappement 18, et que, par contre, ce coefficient $\lambda$ peut être déduit par la valeur de la correction que réalise la boucle fermée de richesse si le système comporte une sonde $\lambda$ 17 de type tout-ou-rien (on-off).

D'une manière bien connue de l'homme du métier, la masse de carburant injectée peut être calculée par l'unité 5 à partir, d'une part, du signal de la sonde $\lambda$, et, d'autre part, d'une quantité ou masse objective de carburant à injecter, elle-même établie en tenant compte d'un signal de richesse objective et d'une masse d'air objective calculés par l'unité 5.

A titre d'exemple, en fonctionnement nominal stabilisé, c'est-à-dire après que le contrôle de l'injection en boucle fermée par l'unité 5 et la sonde $\lambda$ 17 a recentré la valeur de la masse de carburant injectée sur la masse objective déterminée dans l'unité 5, et qu'une correction auto-adaptative a recentré la valeur moyenne du coefficient correctif $\lambda$ de la boucle fermée, toute dérive du coefficient $\lambda$ consécutive à l'application de la commande spécifique de l'injection, c'est-à-dire à l'application des injections multiples à la place des injections de référence, est représentative d'une variation de la masse de carburant

injectée égale à $Mr'-Mr = M.\dfrac{\lambda'-\lambda}{\lambda}$, dans

laquelle :

Mr' est la masse de carburant injectée lors de l'application des injections multiples,
Mr est la masse de carburant injectée, sur le même point de fonctionnement du moteur, lors de l'application des injections de référence (sans application de commande spécifique),
M est la valeur de la masse de carburant objective, qui a été calculée par l'unité de contrôle moteur 5 pour le point de fonctionnement du moteur considéré,
$\lambda$ est la valeur du coefficient $\lambda$ attendue avant l'application des injections multiples (cette valeur étant éventuellement mesurée, si les conditions de stabilité le permettent), et
$\lambda$' est la valeur du coefficient $\lambda$ mesurée après application des injections multiples.

Cette détermination de l'écart de masse de carburant injectée peut être effectuée y compris si le système « circuit d'alimentation-moteur à injection » n'est pas stable pendant la procédure de détermination.

Mais comme le circuit de la figure 1 est un circuit particulier, à volume fixé et sans retour permanent de carburant de l'aval vers l'amont de la pompe 8, qui est pilotée en débit, et dont l'unité de contrôle moteur 5 a en mémoire un modèle de comportement du circuit, l'écart entre les masses de carburant injectées pendant les deux régimes d'application d'injections de référence, et multiples de remplacement peut être mesuré d'une autre manière, d'après l'évolution de la pression dans le circuit de carburant, consécutivement à une perturbation introduite sur le fonctionnement de la pompe d'alimentation 8, et en particulier suite à l'arrêt de la pompe d'alimentation 8, d'une part, pendant l'application des injections de référence, et, d'autre part, pendant l'application des injections multiples, en se basant sur le modèle de comportement du circuit qui fait correspondre, à chaque chute de pression mesurée, une masse de carburant injectée, selon les enseignements du brevet FR 2 803 875.

Selon ce brevet, la correspondance entre une chute de pression dans la rampe 3 et une masse de carburant injectée dans le moteur 1 est assurée dans l'unité 5 par un module 18 de comportement du circuit d'alimentation haute pression, ce module comportant une mémoire dans laquelle est mémorisée, sous la forme de tables ou de cartographies, une loi donnant la variation de masse de carburant dans le circuit haute pression en fonction de la chute de pression déterminée dans ce circuit pendant l'arrêt de la pompe 8.

Cette mesure de l'écart entre les masses de carburant injectées pendant les deux régimes d'application d'injection précités (injections de référence et injections multiples de remplacement) peut être effectuée de la manière à présent décrite en référence à la figure 3, qui représente l'évolution de la pression P en fonction du temps t dans la rampe commune 3.

A partir d'un état, dans lequel le moteur 1 fonctionne alors que la pression Po règne dans la rampe 3, à l'instant to, l'unité 5 commande l'arrêt de la pompe 8, alors que des injections de référence, d'une durée de commande d'injection située dans la zone linéaire 15 de la caractéristique de débit sont appliquées aux injecteurs 2. La pression P chute de Po, à partir de l'instant to d'arrêt de la pompe 8, jusqu'à la pression P1 à l'instant t1, correspondant à la fin de la période de blocage du débit de la pompe 8, et après un nombre suffisant d'injections de référence appliquées aux injecteurs 2 pour que la chute de pression de valeur DP1 = Po-P1 puisse être mesurée avec une précision suffisante par le capteur 4, cette chute de pression DP1 résultant de l'alimentation des cylindres du moteur 1 par les injecteurs 2 à partir de la rampe 3, alors que cette rampe 3 n'est plus alimentée par la pompe 8.

Grâce au modèle de comportement du circuit haute pression, mémorisé dans le module 18 de l'unité 5, et s'appuyant par exemple sur la masse de carburant entrant dans la rampe 3 et imposée par la pompe haute pression 8 en étant déterminée par le calculateur 17 de l'unité 5, et sur la masse sortant de la rampe 3 en étant injectée dans le moteur 1, et également déterminée par l'unité 5, ainsi que sur la rigidité du circuit haute pression, il correspond à la différence de pression DP1 ainsi déterminée, une première masse de carburant injectée dans le moteur 1 par tous les injecteurs 2, et qui correspond à la masse Mr précitée.

Après suppression de la perturbation du fonctionnement de la pompe haute pression 8, et reprise d'un fonctionnement normal du moteur 1 sur le point de fonctionnement considéré, une seconde phase de mesure de masse est initiée, et consiste à réintroduire la même perturbation que précédemment sur le fonctionnement de la pompe haute pression 8, à savoir à couper son débit pendant un intervalle de temps t1-t0 au cours duquel est appliqué le même nombre d'injections multiples de remplacement que le nombre d'injections de référence appliquées pendant le même intervalle de temps t1-t0 ayant conduit à la chute de pression DP1. L'application de ces injections multiples de remplacement alors que le débit de la pompe 8 est nul, conduit, à partir de la pression initiale P0, à une chute de pression DP2 jusqu'à une pression P2 à l'instant t1. Grâce au module 18 de l'unité 5, dans lequel est enregistré et mémorisé le modèle de comportement du circuit d'alimentation haute pression, il correspond à la chute de pression DP2 une seconde masse de carburant ayant quitté ce circuit haute pression et ayant été injectée par les injecteurs 2 dans le moteur 1, cette seconde masse de carburant étant la masse Mr' précitée.

L'unité 5 peut ainsi calculer la différence de masse de carburant injectée Mr-Mr', qui permet le calcul de l'offset réel Or.

La zone linéaire de la caractéristique de débit global peut ainsi être actualisée et mémorisée dans l'unité 5.

Pour actualiser et mémoriser la zone linéaire d'une caractéristique de débit individuel d'un injecteur 2, il suffit de reproduire le processus décrit ci-dessus en appliquant les mêmes injections normales et/ou de référence pendant les deux phases d'applications d'injections sur tous les injecteurs 2 sauf sur celui dont on veut déterminer la caractéristique, cet injecteur 2 étant le seul sur lequel on applique des injections de référence pendant la première phase, puis des injections multiples de remplacement pendant la seconde phase. Bien entendu, dans ce cas, pour obtenir la même sensibilité que précédemment, le nombre égal d'injections de référence et d'injections multiples de remplacement appliquées sera supérieur, pour tenir compte du fait que l'écart de masse de carburant injectée ne résultera que de la contribution d'un seul injecteur 2.

Il est à noter que les deux phases peuvent être inversées, la masse injectée Mr' résultant de l'application d'injections multiples de remplacement étant déterminée avant la masse injectée Mr, résultant de l'application d'injections de référence ou normales, ou encore la succession non adjacente des deux phases peut être répétée un certain nombre de fois en alternant l'ordre des phases. Mais, pour parvenir à un bon apprentissage de l'offset réel Or et de la zone linéaire de la caractéristique de débit, globale ou individuelle, cette procédure d'apprentissage doit être renouvelée pour différents points de fonctionnement du moteur, pour un nombre suffisant dé valeurs de la durée de commande d'injection en zone linéaire des injections de référence, et, éventuellement, pour différents nombres d'injection des injections multiples de remplacement.

La zone linéaire de la caractéristique de débit, globale ou individuelle, ayant été actualisée et mémorisée, par la connaissance de l'offset réel Or et du gain G, il reste à faire l'apprentissage de la zone non linéaire de cette caractéristique.

On suppose connue une zone non linéaire théorique ou nominale de la caractéristique de débit théorique ou nominale, et qui est mémorisée dans l'unité 5. Pour réaliser l'apprentissage de la zone non linéaire, globale ou individuelle, le procédé de l'invention propose, après avoir fait l'apprentissage de la zone linéaire de la caractéristique de débit, c'est-à-dire pour des durées de commande d'injection supérieures au temps minimum, d'identifier des conditions d'utilisation de tous les injecteurs 2 (apprentissage de la caractéristique globale) ou d'un seul injecteur 2 (apprentissage de la caractéristique individuelle) dans la zone linéaire, puis à subdiviser chaque injection de référence, dans la zone linéaire actualisée mémorisée, en un nombre n, au moins égal à deux, d'injections d'une injection multiple de remplacement, de sorte que la somme de ces n injections soit sensée donner la même masse de carburant injectée qu'une injection de référence.

Trois exemples de réalisation sont décrits ci-après en référence respectivement aux figures 4, 5 et 6, les deux exemples des figures 4 et 5 correspondant à un premier mode de mise en oeuvre, et l'exemple de la figure 6 à un second mode de mise en oeuvre.

Selon le premier mode de mise en oeuvre (figures 4 et 5), si l'on veut à priori imposer une valeur de durée de commande d'injection T2 choisie dans la zone non linéaire, et pour laquelle on veut apprendre le point correspondant de la zone non linéaire réelle ou actualisée de la caractéristique de débit, on remplace chacune d'un certain nombre d'injections de référence ayant une durée de commande d'injection dans la zone linéaire réelle ou actualisée, par une injection multiple de remplacement, constituée d'une succession de n injections, dont un nombre de n-1 injections ayant une durée de commande d'injection identique et égale à T2, et dont la énième injection a une durée de commande d'injection T1 (ou T'1) dans la zone linéaire de la caractéristique réelle ou actualisée, et telle que la somme des (n-1) injections de durée de commande T2 augmentée de l'injection de durée de commande T1 (ou T'1) soit supposée provoquer l'injection de la même masse de carburant que l'injection de référence unique de durée de commande T.

Si, par exemple dans le cas de la caractéristique globale, l'ensemble des injecteurs 2 a une caractéristique de débit nominale, le fait de diviser chaque durée de commande d'injection en n injections comme indiqué ci-dessus ne doit pas influer sur la masse totale de carburant injectée. Mais si la masse injectée par l'application des injections multiples de remplacement est différente de celle qui est attendue, c'est-à-dire obtenue avec l'application des injections de référence, l'écart par rapport à cette valeur attendue est représentatif de l'erreur de débit de l'ensemble des injecteurs 2 pour le point correspondant à la durée de commande d'injection T2 choisie dans la zone non linéaire, par rapport à la valeur prévisible, en référence à la zone non linéaire théorique ou nominale. En renouvelant l'opération pour plusieurs valeurs prédéterminées de la durée de commande d'injection T2 dans la zone non linéaire, on peut reconstruire la zone non linéaire de la caractéristique globale des injecteurs, dans toute la plage des durées de commande d'injection qui sont inférieures au temps minimum.

Sur la figure 4, la courbe 4a représente la zone linéaire 15', dont l'apprentissage a été effectué, de la caractéristique de débit dont la zone non linéaire 16 est théorique ou nominale, et une injection de référence de durée de commande T en zone linéaire actualisée 15' assure l'injection d'une masse de carburant M. Cette injection de référence est remplacée par une injection multiple constituée par la succession de deux injections, dont l'une, représentée sur la courbe 4c, a la durée de commande d'injection T2 choisie dans la zone non linéaire théorique ou nominale 16, et à laquelle il correspond une masse de carburant injectée M2 que l'on veut déterminer pour connaître précisément le point correspondant sur la zone non linéaire actualisée. L'autre injection (voir courbe 4b) de l'injection multiple de remplacement correspond à une durée de commande d'injection T1 en zone linéaire actualisée 15', et à laquelle il correspond une masse de carburant injectée M1 déterminée avec précision grâce à l'apprentissage réalisé de cette partie linéaire 15' de la caractéristique. La durée de commande T1 est choisie pour que la somme des deux injections de durées de commande T1 et T2 soit supposée provoquer l'injection de la même masse de carburant M que l'injection de référence de durée de commande T de la courbe 4a. Donc, à priori, M = M1 + M2. D'où M2 = M - M1. Les valeurs de M et M1 étant connues avec précision, puisque déterminées à partir de la zone linéaire actualisée 15' de la caractéristique, on obtient une valeur précise de la masse M2, de sorte que le point (T2, M2) de la zone non linéaire réelle est précisément déterminé.

L'exemple représenté sur la figure 5 ne se distingue de celui décrit ci-dessus en référence à la figure 4 que par le fait que l'injection de référence de durée de commande T en zone linéaire actualisée, à laquelle il correspond la masse de carburant injectée M, représentée sur la courbe 5a, est remplacée par une injection multiple constituée par la succession de trois injections, dont deux, représentées sur les courbes 5c et 5d, ayant chacune la durée de commande T2 choisie dans la zone non linéaire 16 théorique ou nominale, et à laquelle il correspond la masse injectée M2, tandis que la troisième injection est représentée sur la courbe 5b et correspond à une durée de commande T'1 dans la zone linéaire actualisée 15' de la caractéristique, et à laquelle il correspond la masse injectée M'1. Comme la somme des trois injections des courbes 5b, 5c et 5d est supposée procurer l'injection de la même masse de carburant M que l'injection de référence unique de durée de commande T de la courbe 5a, on a donc M = M'1 + 2M2, d'où

$$M2 = \frac{M - M1'}{2} \; .$$

Dans le cas le plus général, si l'injection multiple de remplacement est constituée par la succession de n injections, dont (n-1) de durée de commande T2, et la dernière de durée de commande dans la zone linéaire actualisée et à laquelle il correspond une masse injectée M1, la masse M2 injectée pour chacune des (n-1) injections est : $M2 = \dfrac{M - M1'}{(n-1)} \; .$

Selon le second mode de mise en oeuvre, dont un exemple est à présent décrit en référence à la figure 6, les n injections de chaque injection multiple de remplacement sont d'une même durée de commande d'injection Tn choisie dans la zone non linéaire théorique ou nominale 16, et telles que leur somme est supposée provoquer l'injection de la même masse de carburant qu'une unique injection de référence remplacée, ayant une durée de commande d'injection T dans la zone linéaire 15' actualisée de la caractéristique, et à laquelle il correspond la masse de carburant injectée M connue avec précision. On peut ainsi identifier la zone non linéaire actualisée de la caractéristique de débit au point correspondant, puisqu'il correspond à la durée de commande d'injection Tn la masse de carburant injectée m égale à M/n.

L'exemple de la figure 6 est celui dans lequel chaque injection de référence de durée de commande T dans la zone linéaire actualisée 15', et correspondant à une masse injectée M, est remplacée par une injection multiple constituée par la succession de trois injections identiques de même durée de commande T3 dans la zone non linéaire théorique ou nominale 16, et à laquelle il correspond une masse de carburant injectée m, et de sorte que la somme de ces trois injections successives de l'injection multiple de remplacement provoque l'injection d'une masse égale à M. Donc M = 3m, d'où m = M/3. Ceci permet de déterminer précisément ce point (T3, m) de la zone non linéaire actualisée, qui peut être reconstituée en faisant varier T3, et éventuellement n (égal à 3 dans l'exemple de la figure 6).

On comprend que, dans ce cas, la durée de commande d'injection Tn de chacune des injections de l'injection multiple de remplacement est égale à

$$\frac{T - Or}{n} + Or \, ,$$ puisque n (Tn-Or) = T-Or, si l'on veut considérer que les n injections d'une injection multiple de remplacement injecteront la même masse de carburant qu'une injection unique de référence, dans la mesure où le gain G est constant et le même pour les différentes injections.

Pour confirmer les valeurs des masses injectées lues sur les zones linéaires des caractéristiques, ou pour comparaison aux valeurs lues, ou encore à la place de ces lectures, les masses injectées ou les différences de masse injectées peuvent être déterminées par application du procédé décrit ci-dessus faisant intervenir le coefficient de richesse λ et la masse d'air admise au moteur, ou, si la structure du circuit haute pression le permet, par le procédé faisant intervenir le module de comportement du circuit, qui fait correspondre des masses de carburant injectées à des chutes de pression mesurées dans la rampe de carburant 3 alors que le débit de la pompe 8 est temporairement annulé pendant l'application des deux régimes d'injections de référence et multiples de remplacement.

La zone non linéaire actualisée peut ainsi être déterminée et compléter l'apprentissage de la caractéristique de débit en temps réel, globale ou individuelle, puisque l'offset réel Or a précédemment été déterminé, et que le gain G est présumé constant et égal au gain théorique, ou peut être actualisé par toute autre stratégie adaptée à cet effet.

## Revendications

**1.** Procédé de détermination en temps réel, et en fonction de la durée de commande d'injection, de la caractéristique de débit d'au moins un injecteur (2) de carburant à commande électrique, alimentant un moteur à combustion interne (1), et monté dans un circuit d'alimentation en carburant dudit moteur (1), ledit circuit comprenant au moins une pompe (8) alimentée depuis un réservoir de carburant (12) et reliée à une rampe (3) commune d'alimentation en carburant des injecteurs (2) du moteur (1), chaque injecteur (2) étant commandé par une unité (5) de contrôle moteur, comportant au moins un calculateur et au moins une mémoire, de sorte qu'à chaque cycle du moteur (1), chaque injecteur (2) délivre au moteur (1) une masse de carburant déterminée par ladite caractéristique de débit d'injecteur, exprimant la masse injectée (Mi) selon une fonction croissante de la durée (t) de commande d'injection dudit injecteur (2), commandée par ladite unité (5) de contrôle moteur, ladite caractéristique de débit comportant une zone (15) sensiblement linéaire, aux valeurs de la durée de commande d'injection supérieures à un temps minimum (TinfL), et définie par un gain (G), correspondant à sa pente, et par un décalage à l'origine ou offset (Or), à l'intersection du prolongement de la zone linéaire (15) vers l'origine des durées de commande d'injection, avec l'axe des durées de commande d'injection, ainsi qu'une zone non linéaire (16), aux faibles valeurs des durées de commande d'injection, entre l'offset (Or) et ladite zone linéaire (15), les zones linéaire (15) et non linéaire (16) théoriques nominales étant initialement mémorisées dans l'unité (5) de contrôle moteur, sous la forme d'un offset théorique (Ot) et d'un gain théorique pour la zone linéaire (15), et d'au moins une table ou relation mathématique pour la zone non linéaire (16), **caractérisé en ce qu'**il comprend au moins les étapes consistant à considérer que le gain (G) est égal au gain théorique ou à un gain actualisé à partir du gain théorique, et, pour chaque injecteur (2) dont on veut déterminer la caractéristique, à remplacer chacune d'au moins une injection de référence, d'une durée de commande d'injection (T) commandée par l'unité (5) de contrôle moteur selon la caractéristique mémorisée, par une injection multiple comportant une succession d'au moins deux injections dont les durées de commande d'injection sont supposées provoquer l'injection de la même masse de carburant que l'injection de référence remplacée, à déterminer l'écart de masse de carburant entre l'injection de référence remplacée et l'injection multiple, à en déduire une erreur de détermination de ladite caractéristique, et à modifier le gain (G) et/ou l'offset (Or) de la zone linéaire (15) ou au moins une table ou relation mathématique de la zone non linéaire (16) de sorte à compenser ladite erreur, et à mémoriser la nouvelle caractéristique ainsi déterminée.

**2.** Procédé selon la revendication 1, **caractérisé en ce qu'**il comprend au moins des étapes consistant à déterminer d'abord l'offset réel Or de ladite zone linéaire (15') de ladite caractéristique, en remplaçant chacune d'au moins une injection de référence de durée de commande d'injection T par un nombre n ≥ 2 d'injections d'une même durée de commande d'injection $\dfrac{T - Ot}{n} + Ot$, supérieure au temps minimum (TinfL), et où Ot est l'offset théorique ou nominal, et à déterminer que l'offset réel Or est donné par la formule $Or = \dfrac{Mr - Mr'}{(n-1).G} + Ot$, où Mr et Mr' sont les masses de carburant injectées respectivement pendant les applications des injections de référence et multiples, n est le nombre d'injections de chaque injection multiple, G est le gain de l'injecteur (2) ou des injecteurs (2) considérés en supposant que le gain réel est égal au gain nominal ou théorique mémorisé dans l'unité (15) de contrôle moteur, dans laquelle est également mémorisé l'offset théorique ou nominal Ot.

**3.** Procédé selon la revendication 2, **caractérisé en ce qu'**il comprend au moins les étapes consistant à déterminer ladite zone non linéaire (16) après avoir déterminé ladite zone linéaire (15'), et à remplacer chacune d'au moins une injection de référence de durée de commande d'injection T dans ladite zone linéaire (15'), et à laquelle il correspond une masse injectée M, par une injection multiple comportant une succession de n ≥ 2 injections supposées donner la même masse de carburant injectée M que l'injection de référence remplacée et ayant une même durée de commande d'injection (Tn) située dans la zone non linéaire (16), de sorte à identifier la caractéristique de débit au point correspondant de sa zone non linéaire (16), pour lequel il correspond à la durée de commande de chaque injection d'une injection multiple $Tn = \dfrac{T - Or}{n} + Or$, une masse de carburant injectée $\dfrac{M}{n}$, et à faire varier n et/ou Tn, pour identifier au moins une partie de la zone non linéaire (16).

**4.** Procédé selon la revendication 2, **caractérisé en ce qu'**il comprend au moins les étapes consistant à déterminer la zone non linéaire (16) après avoir déterminé la zone linéaire (15'), et à imposer une durée de commande d'injection T2 dans la zone non linéaire (16), et pour laquelle on veut déterminer la caractéristique, et à remplacer chacune d'au moins une injection de référence de durée de commande d'injection T dans la zone linéaire et à laquelle il correspond une masse injectée M, par une injection multiple à n ≥ 2 injections, supposées donner la même masse de carburant injectée M que l'injection de référence remplacée, et dont l'une a une durée de commande d'injection T1 située dans la zone linéaire (15'), et à laquelle il correspond une masse injectée M1, et dont les n-1 autre(s) injection(s) ont chacune la même durée de commande d'injection T2 imposée, et à chacune desquelles il correspond une masse injectée M2 telle que $M2 = \dfrac{M - M1}{n - 1}$, et à faire varier T2, inférieure au temps minimum (TinfL), et/ou n, de sorte à déterminer au moins une partie de la zone non linéaire (16).

**5.** Procédé selon l'une quelconque des revendications 1 à 4, **caractérisé en ce que** ledit écart de masse de carburant injectée est déterminé en tenant compte de la variation de richesse du mélange air/carburant, en se basant sur un signal procuré à l'unité (5) de contrôle moteur par une sonde λ (17) détectant la teneur en oxygène dans les gaz d'échappement (18) du moteur (1), et de la masse d'air admise au moteur (1).

**6.** Procédé selon la revendication 5, **caractérisé en ce que** ledit écart de masse de carburant injectée est calculé par l'unité (5) de contrôle moteur à partir du signal de la sonde λ (17) et d'une masse objective de carburant à injecter, ladite masse objective étant établie en tenant compte de la masse d'air admise au moteur (1) et d'un signal de richesse objective.

7. Procédé selon l'une quelconque des revendications 1 à 4, **caractérisé en ce que**, dans le cas où le circuit d'alimentation en carburant est du type à volume fixé et sans retour permanent de carburant depuis l'aval vers l'amont de ladite pompe (8), pilotée en débit, et dont l'unité (5) de contrôle moteur a en mémoire un modèle (18) de comportement du circuit, ledit écart de masse de carburant injectée est déterminé, en se basant sur ledit modèle (18) de comportement du circuit, d'après l'évolution de la pression (P) dans le circuit de carburant suite à une perturbation imposée au fonctionnement de la pompe (8).

8. Procédé selon la revendication 7, **caractérisé en ce que** ledit écart de masse de carburant injectée est déterminé d'après des chutes de pression (DP1, DP2) dans le circuit d'alimentation, consécutives à l'arrêt de ladite pompe (8) d'alimentation, d'une part, pendant l'application d'au moins une injection de référence, et, d'autre part, pendant l'application de la ou des injections multiples de remplacement, le modèle (18) de comportement du circuit faisant correspondre, à chaque chute de pression (DP1, DP2), une masse de carburant injectée (Mr, Mr').

9. Procédé selon l'une quelconque des revendications 1 à 8, **caractérisé en ce qu'**il est appliqué soit à la totalité des injecteurs (2) d'un moteur (1), soit à un seul injecteur (2) à la fois.

10. Procédé selon la revendication 9, **caractérisé en ce qu'**il est appliqué successivement sur chacun des injecteurs (2) du moteur (1), de façon à faire l'apprentissage de leurs caractéristiques individuelles.

## Claims

1. A method of determining the flow rate characteristic of at least one electrically-controlled fuel injector (2) feeding an internal combustion engine (1) and mounted in a fuel feed circuit of said engine (1), the determination being in real time and as a function of an injection control duration, and said circuit comprising at least one pump (8) fed from a fuel tank (12) and connected to a common rail (3) for feeding fuel to the injectors (2) of the engine (1), each injector (2) being controlled by an engine control unit (5), including at least one calculator and at least one memory, such that on each cycle of the engine (1), each injector (2) delivers a mass of fuel to the engine (1) as determined by said injector flow rate characteristic, which expresses the mass injected (Mi) as an increasing function of the injection control duration ($\underline{t}$) of said injector (2) as controlled by said engine control unit (5), said flow rate characteristic including a zone (15) that is substantially linear, for injection control duration values greater than a minimum time (TinfL), and defined by a gain (G) corresponding to its slope, and by an offset at the origin (Or) where the extension of the linear zone (15) towards the origin of injection control durations intersects the injection control duration axis, and a non-linear zone (16) for small values of injection control durations, between the offset (Or) and said linear zone (15), the nominal theoretical linear and non-linear zones (15 and 16) being initially stored in the engine control unit (5) in the form of a theoretical offset (Ot) and a theoretical gain for the linear zone (15), together with at least one table or mathematical relationship for the non-linear zone (16),

the method being **characterized in that** it comprises at least the steps consisting in: assuming that the gain (G) is equal to the theoretical gain or to an updated gain based on the theoretical gain; and for each injector (2) whose characteristic is to be determined, replacing each of at least one reference injection having an injection control duration (T) controlled by the engine control unit (5) in compliance with the stored characteristic, with a multiple injection comprising a succession of at least two injections of injection control durations that are assumed to cause the same mass of fuel to be injected as by the replaced reference injection; in determining the difference in fuel mass between the replaced reference injection and the multiple injection; in deducing therefrom an error in the determination of said characteristic; and in modifying the gain (G) and/or the offset (Or) of the linear zone (15) or at least a table or mathematical relationship for the non-linear zone (16) so as to compensate said error, and storing the new characteristic as determined in this way.

2. A method according to claim 1, **characterized in that** it comprises at least steps consisting in initially determining the real offset Or of said linear zone (15') of said characteristic, by replacing each of at least one reference injection of injection control duration T by a number n ≥ 2 injections having a common injection control duration:

$$\frac{T - Ot}{n} + Ot$$

that is greater than the minimum time (TinfL), and in which Ot is the nominal or theoretical offset, and in determining that the real offset Or is given by the formula:

$$Or = \frac{Mr - Mr'}{(n-1).G} + Ot$$

where Mr and Mr' are the masses of fuel injected respectively during applications of the reference injections and of the multiple injections, $\underline{n}$ is the number of injections of each multiple injection, G is the gain of the injector (2) or of the injectors (2) in question, assuming that the real gain is equal to the theoretical or nominal gain stored in the engine control unit (15), which also stores the nominal or theoretical offset Ot.

3. A method according to claim 2, **characterized in that** it comprises at least the steps consisting in determining said non-linear zone (16) after determining said linear zone (15'), and in replacing each of at least one reference injection of injection control duration T in said linear zone (15'), corresponding to an injected mass M, with a multiple injection comprising a succession of $n \geq 2$ injections assumed to give the same injected mass of fuel M as the replaced reference injection and having a common injection control duration (Tn) situated in the non-linear zone (16), so as to identify the flow rate characteristic at the corresponding point of its non-linear zone (16), for which the control duration of each injection of a multiple injection

$$Tn = \frac{T - Or}{n} + Or$$

corresponds to an injected mass of fuel M/n, and in varying $\underline{n}$ and/or Tn in order to identify at least a fraction of the non-linear zone (16).

4. A method according to claim 2, **characterized in that** it comprises at least the steps consisting in determining the non-linear zone (16) after determining the linear zone (15'), and in imposing an injection control duration T2 in the non-linear zone (16) for which it is desired to determine the characteristic, and in replacing each of at least one reference injection of injection control duration T in the linear zone corresponding to an injected mass M with a multiple injection of $n \geq 2$ injections assumed to give the same injected mass of fuel M as the replaced reference injection, and one of which has an injection control duration T1 situated in the linear zone (15'), corresponding to an injected mass M1, while each of the other (n-1) injection(s) has a common imposed injection control duration T2, each corresponding to an injected mass M2 such that:

$$M2 = \frac{M - M1}{n - 1}$$

and in varying T2, less than the minimum time (TinfL), and/or varying $\underline{n}$, so as to determine at least a portion of the non-linear zone (16).

5. A method according to any one of claims 1 to 4, **characterized in that** said injected fuel mass difference is determined by taking account of the variation of the richness of the air/fuel mixture, on the basis of a signal delivered to the engine control unit (5) by a $\lambda$ probe (17) detecting the oxygen content in the exhaust gas (18) of the engine (1), and on the basis of the mass of air admitted to the engine (1).

6. A method according to claim 5, **characterized in that** said injected fuel mass difference is calculated by the engine control unit (5) on the basis of the signal from the $\lambda$ probe (17) and an objective mass of fuel to be injected, said objective mass being established by taking account of the mass of air admitted to the engine (1) and an objective richness signal.

7. A method according to any one of claims 1 to 4, **characterized in that**, when the fuel feed circuit is of the type having a fixed volume without a permanent return of fuel from downstream to upstream of said pump (8) which is delivery-rate controlled, and in which the engine control unit (5) has in its memory a model (18) of the behavior of the circuit, said injected fuel mass difference is determined on the basis of said circuit behavior model (18), as a function of the variation of pressure (P) in the fuel circuit after an imposed disturbance to the operation of the pump (8).

8. A method according to claim 7, **characterized in that** said injected fuel mass difference is determined as a function of pressure drop ($DP_1$, $DP_2$) in the feed circuit resulting from stopping said feed pump (8), firstly while applying at least one reference injection, and secondly while applying the replacement multiple injection(s), the circuit behavior model (18) providing a correspondence between each pressure drop ($DP_1$, $DP_2$) and an injected mass of fuel (Mr, Mr').

9. A method according to any one of claims 1 to 8, **characterized in that** it is applied either to all of the injectors (2) of an engine (1), or else to a single injector (2) at a time.

10. A method according to claim 9, **characterized in that** it is applied in succession to each of the injectors (2) of the engine (1) in order to discover their individual characteristics.

**Patentansprüche**

1.  Verfahren zur Bestimmung, in Echtzeit und in Abhängigkeit von der Zeit der Steuerung der Einspritzung, der Durchsatzkennlinie mindestens eines Kraftstoffeinspritzers (2) mit elektrischer Steuerung, der einen Verbrennungsmotor (1) versorgt und in einem Kreis zur Kraftstoffversorgung dieses Motors (1) angeordnet ist, wobei dieser Kreis mindestens eine Pumpe (8) umfasst, die aus einem Kraftstoffbehälter (12) versorgt wird und mit einer gemeinsamen Rampe zur Kraftstoffversorgung der Einspritzer (2) des Motors (1) verbunden ist, wobei jeder Einspritzer (2) durch eine Motorsteuereinheit (5) gesteuert wird, umfassend mindestens einen Rechner und mindestens einen Speicher, so dass jeder Einspritzer (2) bei jedem Zyklus des Motors (1) dem Motor (1) eine Kraftstoffmasse liefert, die durch diese Einspritzerdurchsatzkennlinie bestimmt ist, die die eingespritzte Masse (Mi) gemäß einer steigenden Funktion der Zeit (t) der Steuerung der Einspritzung des Einspritzers (2) ausdrückt, die durch diese Motorsteuereinheit (5) gesteuert wird, wobei diese Durchsatzkennlinie bei den Werten der Zeit der Einspritzungssteuerung, die größer als eine Minimumzeit (TinfL) sind, eine im Wesentlichen lineare Zone (15) umfasst, die durch einen ihrer Neigung entsprechenden Gewinn (G) und durch eine Versetzung am Ursprung oder Offset (Or) an der Schnittstelle der Verlängerung dieser linearen Zone (15) auf den Ursprung der Einspritzsteuerungszeiten zu mit der Achse der Zeiten der Steuerung der Einspritzung definiert ist, sowie eine nicht lineare Zone (16) bei den niedrigen Werten der Einspritzungssteuerungszeiten zwischen dem Offset (Or) und der linearen Zone (15), wobei die theoretische nominale lineare Zone (15) und theoretische nominale nicht lineare (16) Zone anfangs in der Motorsteuereinheit (5) in der Form eines theoretischen Offsets (Ot) und eines theoretischen Gewinns bei der linearen Zone (15), und mindestens einer Tabelle oder mathematischen Beziehung bei der nicht linearen Zone (16) gespeichert sind,
    **dadurch gekennzeichnet, dass** es mindestens die Schritte umfasst, die darin bestehen, dass betrachtet wird, ob der Gewinn (G) gleich dem theoretischen Gewinn oder einem aus dem theoretischen Gewinn aktualisierten Gewinn ist, und bei jedem Einspritzer (2), dessen Kennlinie bestimmt werden soll, jede mindestens eine Bezugseinspritzung von einer durch die Motorsteuereinheit (5) gemäß der gespeicherten Kennlinie gesteuerten Zeit (T) der Steuerung der Einspritzung durch eine Vielfacheinspritzung ersetzt wird, die eine Folge von mindestens zwei Einspritzungen umfasst, von deren Einspritzungssteuerungszeiten man annimmt, dass sie die Einspritzung derselben Kraftstoffmasse wie die ersetzte Bezugseinspritzung bewirken, die Abweichung die Kraftstoffmasse zwischen der ersetzten Bezugseinspritzung und der Vielfacheinspritzung bestimmt wird, daraus ein Fehler der Bestimmung der Kennlinie abgeleitet wird und der Gewinn (G) und/oder der Offset (Or) der linearen Zone (15) oder mindestens eine Tabelle oder mathematische Beziehung der nicht linearen Zone (16) so geändert wird, dass dieser Fehler kompensiert wird, und die neue, auf diese Weise bestimmte Kennlinie gespeichert wird.

2.  Verfahren nach Anspruch 1, **dadurch gekennzeichnet, dass** es mindestens Schritte umfasst, die darin bestehen, dass zunächst der tatsächliche Offset Or der linearen Zone (15') der Kennlinie bestimmt wird, indem jede von mindestens einer Bezugseinspritzung von einer Einspritzungssteuerungszeit T durch eine Anzahl von n ≥ 2 Einspritzungen von einer gleichen Einspritzungssteuerzeit

    $$\frac{T-Ot}{n} + Ot$$

    ersetzt wird, die größer als die Minimumzeit (TinfL) ist, und worin Ot der theoretische oder nominale Offset ist, und bestimmt wird, ob der tatsächliche Offset Or durch die Formel

    $$Or = \frac{Mr - Mr'}{(n-1).G} + Ot$$

    gegeben ist, in der Mr und Mr' die jeweils während der Anwendungen der Bezugseinspritzungen bzw. der Vielfacheinspritzungen eingespritzten Kraftstoffmassen sind, n die Anzahl von Einspritzungen bei jeder Vielfacheinspritzung ist, G der Gewinn des Einspritzers (2) oder der betrachteten Einspritzer (2) ist, indem angenommen wird, dass der tatsächliche Gewinn gleich dem nominalen oder theoretischen Gewinn ist, der in der Motorsteuereinheit (15) gespeichert ist, in der auch der theoretische oder nominale Offset Ot gespeichert ist.

3.  Verfahren nach Annspruch 2, **dadurch gekennzeichnet, dass** es mindestens die Schritte umfasst, die darin bestehen, dass die nicht lineare Zone (16) bestimmt wird, nachdem die lineare Zone (15') bestimmt wurde, und jede mindestens eine Bezugseinspritzung mit der Einspritzungssteuerungszeit T in dieser linearen Zone (15'), der eine eingespritzte Masse M entspricht, durch eine Vielfachinjektion ersetzt wird, die eine Folge von n ≥ 2 Injektionen umfasst, von denen angenommen wird, dass sie dieselbe eingespritzte Kraftstoffmasse M wie die ersetzte Bezugseinspritzung ergeben, und die eine gleiche Einspritzungssteuerungszeit (Tn) haben, die in der nicht linearen Zone (16) gelegen ist, so dass die Durchsatzkennlinie an dem entsprechenden Punkt ihrer nicht linearen Zone (16) identifiziert wird, bei dem der Steuerungszeit jeder Einspritzung einer Mehrfacheinspritzung

$$T_n = \frac{T - Or}{n} + Or,$$ eine eingespritzte Kraftstoffmasse $M/n$ entspricht, und n und/ oder Tn geändert werden, um mindestens einen Teil der nicht linearen Zone (16) zu identifizieren.

4.  Verfahren nach Anspruch 2, **dadurch gekennzeichnet, dass** es mindestens die Schritte umfasst, die darin bestehen, dass die nicht lineare Zone (16) bestimmt wird, nachdem die lineare Zone (15') bestimmt wurde, und eine Einspritzungssteuerungszeit T2 in der nicht linearen Zone (16) auferlegt wird, für die man die Kennlinie bestimmen möchte, und dass jede der mindestens einen Bezugseinspritzung von der Einspritzungssteuerungszeit T in der linearen Zone, der ein eingespritzte Masse M entspricht, durch eine Vielfacheinspritzung mit n ≥ 2 Einspritzungen ersetzt wird, von denen angenommen wird, dass sie dieselbe eingespritzte Kraftstoffmasse M wie die ersetzte Bezugseinspritzung ergeben, und von denen eine eine Einspritzungssteuerungszeit T1 aufweist, die in der linearen Zone (15') gelegen ist, und der eine eingespritzte Masse M1 entspricht und von denen die n-1 andere(n) Einspritzung(en) jeweils dieselbe auferlegte Einspritzungssteuerungszeit (T2) haben und deren jeder eine solche eingespritzte Masse M2 entspricht, dass

$$M2 = \frac{M - M1}{n - 1},$$ und dass T2, das kleiner als die Minimum-zeit (TinfL) ist, und/oder n so geändert werden, dass mindestens ein Teil der nicht linearen Zone (16) bestimmt wird.

5.  Verfahren nach einem der Ansprüche 1 bis 4, **dadurch gekennzeichnet, dass** diese Abweichung der eingespritzten Kraftstoffmasse bestimmt wird, indem die Änderung des Mischungsverhältnisses des Luft/Kraftstoff-Gemisches berücksichtigt wird, und zwar auf der Basis eines Signals, das der Motorsteuereinheit (5) durch eine λ-Sonde (17) geliefert wird, die den Sauerstoffgehalt in den Abgasen (18) des Motors (1) erfasst, sowie die in den Motor (1) eingelassene Masse.

6.  Verfahren nach Anspruch 5, **dadurch gekennzeichnet, dass** die Abweichung der eingespritzten Kraftstoffmasse durch die Motorsteuereinheit (5) ausgehend von dem Signal der λ-Sonde (17) und von einer objektiven einzuspritzenden Kraftstoffmasse errechnet wird, wobei diese objektive Masse ermittelt wird, indem die zum Motor (1) zugelassene Luftmasse und ein Signal des objektiven Mischungsverhältnisses berücksichtigt wird.

7.  Verfahren nach einem der Ansprüche 1 bis 4, **dadurch gekennzeichnet, dass** in dem Fall, in dem der Kraftstoffversorgungskreis vom Typ mit festem Volumen und ohne permanente Kraftstoffrückkehr von der Ausgangsseite zur Eingangsseite der im Durchsatz gesteuerten Pumpe (8) ist und deren Motorsteuereinheit (5) ein Modell (18) des Verhaltens des Kreises gespeichert hat, diese Abweichung der eingespritzten Kraftstoffmasse auf der Basis dieses Modells des Verhaltens des Kreises nach der Änderung des Drucks (P) in dem Kraftstoffkreis als Folge einer auf den Betrieb der Pumpe (8) ausgeübten Störung bestimmt wird.

8.  Verfahren nach Anspruch 7, **dadurch gekennzeichnet, dass** diese Abweichung der eingespritzten Kraftstoffmasse nach den Druckabfällen (DP1, DP2) in dem Versorgungskreis in der Folge des Stillstands der Versorgungspumpe bestimmt wird, und zwar einerseits während des Anlegens mindestens einer Bezugseinspritzung und andererseits während des Anlegens der Ersatzvielfacheinspritzung(en), wobei das Modell (18) des Verhaltens des Kreises jedem Druckabfall (DP1, DP2) eine eingespritzte Kraftstoffmasse (Mr, Mr') entsprechen lässt.

9.  Verfahren nach einem der Ansprüche 1 bis 8, **dadurch gekennzeichnet, dass** es entweder auf die Gesamtheit der Einspritzer (2) des Motors (1) oder jedes Mal nur auf einen Einspritzer (2) angewandt wird.

10. Verfahren nach Anspruch 9, **dadurch gekennzeichnet, dass** es nacheinander auf jeden der Einspritzer (2) des Motors (1) so angewandt wird, dass ein Lernen ihrer individuellen Kennlinien vorgenommen wird.

FIG.1.

FIG.2.

FIG.3

FIG.4.

FIG.5.

EP 1 644 627 B1

FIG.6.

EP 1 644 627 B1